# EUROPÄISCHE PATENTSCHRIFT

(11) **EP 0 381 947 B1**
(45) Veröffentlichungstag und Bekanntmachung des Hinweises auf die Patenterteilung: **11.01.1995**
(21) Anmeldenummer: 90100710.4
(22) Anmeldetag: 15.01.1990
(51) Int. Cl.: F16D 66/02

(54) **Reibbelag-Warneinrichtung**
Signalling device for a friction pad
Dispositif d'avertissement pour garniture de friction

(30) Priorität: 04.02.1989 DE 3903306
(43) Veröffentlichungstag der Anmeldung: 16.08.1990
(73) Patentinhaber: ITT Automotive Europe GmbH, 60488 Frankfurt (DE)
(72) Erfinder: Weiler, Rolf, D-6232 Eppstein 2 (DE); Paschke, Klaus-Dieter, D-6238 Hofheim 7 (DE); Bach, Uwe, D-6272 Niedernhausen (DE); Roth, Gerald, D-6450 Hanau 1 (DE)

(56) Entgegenhaltungen:
- FR-A- 2 485 132

## Beschreibung

Die Erfindung betrifft eine Reibbelag-Warneinrichtung für eine bolzengeführte Teilbelag-Scheibenbremse gemäß dem Oberbegriff des Anspruchs 1.

Aus der DE-OS 29 29 039 ist eine Reibbelag-Warneinrichtung bekannt, die zwischen einem Endabschnitt eines Bremsträgers und einem Bolzen angeordnet und mit diesem verbunden ist. Die Reibbelag-Warneinrichtung hat ein ein zweites Bauelement bildendes Gehäuse, das an einem Endabschnitt des Bremsträgers befestigt ist, und eine ein erstes Bauelement bildende, stangenförmige Sonde, die mit einem Federring reibschlüssig an dem Bolzen befestigt ist. In dem Gehäuse ist ein Anschlagglied angeordnet, an das sich das Ende der Sonde anzulegen vermag, um die Bewegung der Sonde in das Gehäuse zu begrenzen. Bei der Befestigung der Reibbelag-Warneinrichtung in dem Bremsträger bzw. in dem Bolzen ergeben sich insbesondere bei der Befestigung der Sonde in dem Bolzen Schwierigkeiten, weil die Eindringtiefe der Sonde in dem Bolzen eine Relativstellung zwischen dem Gehäuse und der Sonde definiert und die Eindringtiefe nicht überprüfbar ist. Die Anzeige des Belagverschleißes ist von der Relativstellung zwischen Sonde und Bolzen abhängig. Bei unsachgemäßer Montage zeigt die Einrichtung nicht richtig an oder löst sich die Reibbelag-Warneinrichtung von der Scheibenbremse.

Es ist Aufgabe der Erfindung, eine verschleißlose, wiederverwendbare Reibbelag-Warneinrichtung und die Anzeige des Bremsbelagverschleißes zu verbessern. Die Befestigung soll sicher sein. Insbesondere sollen mehrere Warnpunkte, die einem Fahrer oder einer Werkstatt verschiedene Reibbelagdicken anzeigen, in der Warneinrichtung angeordnet werden.

Diese Aufgabe wird gemäß den Merkmalen des Anspruchs 1 gelöst. Durch den axialen Anschlag des Stiftes an dem Bolzen ist eine erste Ruhestellung des Stiftes zum Bolzen definiert. Damit ist eine Grundeinstellung vorgenommen, nach der sich eine zweite Einstellung, nämlich eine Toleranzausgleichseinstellung zwischen Schaltgehäuse, Sattelgehäuse und Bolzen bzw. dem Stift vornehmen läßt. Damit ist sichergestellt, daß, ausgehend von der Grundeinstellung, bei Bremsbelagverschleiß eine genaue Wegstrecke zwischen Stift und Schaltgehäuse, die bei Bremsbelagverschleiß eine Relativbewegung zueinander ausführen, zurückgelegt ist. Mit Hilfe dieser Wegstrecke lassen sich elektrisch betätigbare Schalter, die über den Weg angeordnet sind, nacheinander betätigen.

In einer einfachen Ausgestaltung der Erfindung ist der Stift zylinderförmig und mit einem kleineren Durchmesser als der Innendurchmesser des Innensechskantes des Bolzens ausgeführt, so daß die Stirnfläche des Stiftes in einem Innensechskant des Bolzens einführbar und dort gegen den Boden des Innensechskant anschlagbar ist. Damit ist der Stift fertigungstechnisch einfach ausgeführt.

In einer weiteren Ausgestaltung der Erfindung weist der Stift einen ringförmig umlaufenden Vorsprung mit einer radial ausgerichteten Fläche auf, die als Anschlag gegen die Stirnfläche des Bolzens angelegt ist. Mit dieser Ausführung liegt der Stift an dem Bolzen an, so daß eine Befestigung zwischen der Reibbelag-Warneinrichtung und der Teilbelag-Scheibenbremse gewährleistet ist, weil eine Befestigungseinrichtung sicher zwischen dem Stift und dem Bolzen verklemmt.

In einer vorteilhaften Ausgestaltung der Erfindung wird die Bodenfläche des Schaltgehäuses gegen die zweite Stirnfläche des Stiftes gelegt, womit die Grundeinstellung zwischen Stift und Schaltgehäuse bzw. zwischen Bolzen und Sattelgehäuse bzw. Bremsträger bei neuen Bremsbelägen festgelegt ist.

In vorteilhafter Weise ist das Schaltgehäuse an der Dämpfungshülse (Bushing) angeordnet, die den Bolzen mantelförmig umgibt und in einer Bohrung des Gehäuses bzw. des Bremsträgers zwischen dem Bolzen und dem Gehäuse bzw. Bremsträger angeordnet ist. Dabei findet das Schaltgehäuse als integrierendes Bestandteil bei der Dämpfungshülse Verwendung.

In einer einfachen Ausgestaltung der Erfindung weist das Schaltgehäuse ein Gewinde auf, das auf die Dämpfungshülse aufschraubbar ist. Als Gegenstück weist die Dämpfungshülse einen Gewindeeinsatz, vorzugsweise aus Metall oder Kunststoff, auf, den das Schaltgehäuse aufschraubbar ist. Beim Aufschrauben kann anhand des Drehmomentes die einzelnen Montagepunkte, wie z.B. Anschlag des Stiftes an den Bolzen (Grundeinstellung) und danach der Anschlag des Schaltgehäuses an dem Stift (Toleranzausgleich) überprüft werden.

Mit Hilfe von axial ausgerichteten Nuten und axial ausgerichteten Vorsprüngen einer Schutzhülse, die in entsprechend ausgebildete Gegenstücke des Gewindeeinsatzes und des Schaltgehäuses eingreifen, wird das Schaltgehäuse vorteilhaft gegen Verdrehung und unbeabsichtigtes Lösen gesichert.

In einer weiteren einfachen Ausgestaltung der Erfindung weist das Schaltgehäuse rastenförmig ausgebildete und ringförmig umlaufende Vorsprünge auf, die in entsprechend ausgeformte Nuten eines sich axial ersteckenden Fortsatzes der Dämpfungshülse eingreift. Mit Hilfe der rastenförmigen Vorsprünge in den Nuten wird vorteilhaft der Toleranzausgleich zwischen Sattelgehäuse bzw. Bremsträger und Bolzen durchgeführt.

In einer vorteilhaften Ausgestaltung der Erfindung weist das Schaltgehäuse ein Sensorgehäuse mit Haken auf. Die Haken hintergreifen unlösbar entsprechend ausgebildete zweite Haken einer Dämpfungshülse. Damit ist ein sicherer Sitz der Reibbelag-Warneinrichtung an der Dämpfungshülse gewährleistet.

In einer vorteilhaften Ausgestaltung der Erfindung ist auf dem Stift eine zum Stift verschiebbare Buchse angeordnet. Bei der Montage der Reibbelag-Warneinrichtung und der Teilbelag-Scheibenbremse wird der Toleranzausgleich zwischen dem Stift und der zum Stift zugehörigen Buchse durchgeführt. Dabei ist vorteilhaft die Warneinrichtung gegen unbeabsichtigtes Verstellen des Schaltgehäuses gesichert, weil das Schaltgehäuse auf axialem Anschlag gegen die Dämpfungshülse sitzt.

Dabei kann in einer einfachen Ausführung die Buchse reibschlüssig auf dem Stift verklemmen. In einer weiteren Ausgestaltung der Erfindung sind Rasten sowohl auf dem Stift als auch auf der inneren Mantelfläche der Buchse vorgesehen, so daß Buchse und Stift an diesen Rasten miteinander verhaken können.

Mit Hilfe einer axial verlaufenden Nut und einem axial verlaufenden Vorsprung wird vorteilhaft einer Verdrehung zwischen Stift und Buchse vorgesorgt.

Eine radial nach innen gerichtete Nase an der Hülse und eine radial nach außen gerichtete Nase an dem Stift sorgen vorteilhaft bei der Demontage von Teilbelag-Scheibenbremse und Reibbelag dafür, daß gleichzeitig mit der Hülse auch der Stift aus dem Bolzen gezogen werden kann. Dabei wird eine Montageposition zwischen Stift und Hülse definiert.

In einer vorteilhaften Ausgestaltung der Erfindung weist der Stift einen Außendurchmesser auf, der kleiner ist als der Innendurchmesser des Innensechskantes von dem Bolzen. Damit kann der Stift problemlos in den Innensechskant eingeführt werden. Eine Feder sorgt für den Anschlag des Stiftes an den Bolzen.

In einer weiteren vorteilhaften Ausgestaltung der Erfindung weist der Stift als Befestigung ein Federblech auf, das den Stift in dem Innensechskant des Bolzens verklemmt.

Eine weitere vorteilhafte Ausgestaltung der Erfindung sieht vor, daß der Stift Federringe aufweist, die den Stift in dem Innensechskant des Bolzens halten.

In einer anderen vorteilhaften Ausgestaltung der Erfindung weist der Stift ein Klemmstück auf, das von einem Niet an dem Stift gehalten und in dem Bolzen verklemmbar ist. Dabei ist mit Hilfe des axialen Anschlags zwischen Stift und Bolzen vorteilhaft sichergestellt, daß auch für eine axial kurz gebaute Öffnung bzw. einen axial kurz bemessenen Innensechskant Befestigungsmittel wie Federblech, Federringe oder Klemmstücke vollständig in der Öffnung bzw. in den Innensechskant eingesetzt sind und dort in dem Bolzen lösbar verklemmen, einrasten oder eingreifen und ihre Funktion sicher erfüllen.

Um ein Verschmutzen der Reibbelag-Warneinrichtung zu verhindern, ist eine Manschette an dem Stift und der Hülse befestigt, die die elektrischen Teile der Reibbelag-Warneinrichtung schützt.

Schutz gesucht wird auch für die Reibbelag-Warneinrichtung an sich. Diese Reibbelag-Warneinrichtung ist insbesondere für eine Teilbelag-Scheibenbremse vorgesehen und weist einen Stift mit einer Stirnfläche und eine Hülse mit einer Bodenfläche auf, die bei der Montage gegeneinander anschlagen.

Sind mehrere Schalter zwischen dem Schaltgehäuse und dem Stift angeordnet und gehen die vorbestimmten Wegstrecken gegen Null, d.h., werden die vorbestimmten Wegstecken oder die Abstände zwischen den Schaltern unendlich klein, so ist auch vorteilhaft eine stufenlose, kontinuierliche Anzeige des Belag-Verschleißes z.B. nach Art eines Potentiometers möglich.

Nachfolgend ist die Erfindung anhand von Ausführungsbeispielen in der Zeichnung näher erläutert.

Es zeigen
- Fig. 1: eine Teilbelag-Scheibenbremse mit neuen Bremsbelägen,
- Fig. 2: eine Teilbelag-Scheibenbremse mit abgenutzten Bremsbelägen,
- Fig. 3: eine Reibbelag-Warneinrichtung, deren Schaltgehäuse an einem Gewindeeinsatz der Dämpfungshülse festgeschraubt und mit einer Schutzhülse gesichert ist,
- Fig, 4: eine weitere Reibbelag-Warneinrichtung, deren Stift zweistückig ausgebildet ist,
- Fig. 5: eine dritte Reibbelag-Warneinrichtung mit radialen Nasen, die zur Demontage der gesamten Reibbelag-Warneinrichtung von der Teilbelag-Scheibenbremse dienen,
- Fig. 6: eine vierte Reibbelag-Warneinrichtung, deren Stift mittels einer Feder am Bolzen gehalten ist,
- Fig. 7: eine fünfte Reibbelag-Warneinrichtung, deren Stift mittels eines Klemmstücks am Bolzen gehalten ist,
- Fig. 8: eine sechste Reibbelag-Warneinrichtung, deren Stift mittels Sprengring in dem Bolzen gehalten ist,
- Fig. 9: einen Stift, der mittels einer innenliegenden Federmanschette in dem Bolzen gehalten ist,
- Fig.10: einen Querschnitt durch die sechste Reibbelag-Warneinrichtung,
- Fig.11: eine siebte Reibbelag-Warneinrichtung mit zweigeteiltem Stift und einer Schutzmanschette und
- Fig.12: dieselbe Reibbelag-Warneinrichtung im Querschnitt.

Nachfolgend sind teilweise der Einfachheit halber sich (funktionsmäßig) entsprechende Teile mit gleichen Bezugszeichen versehen.

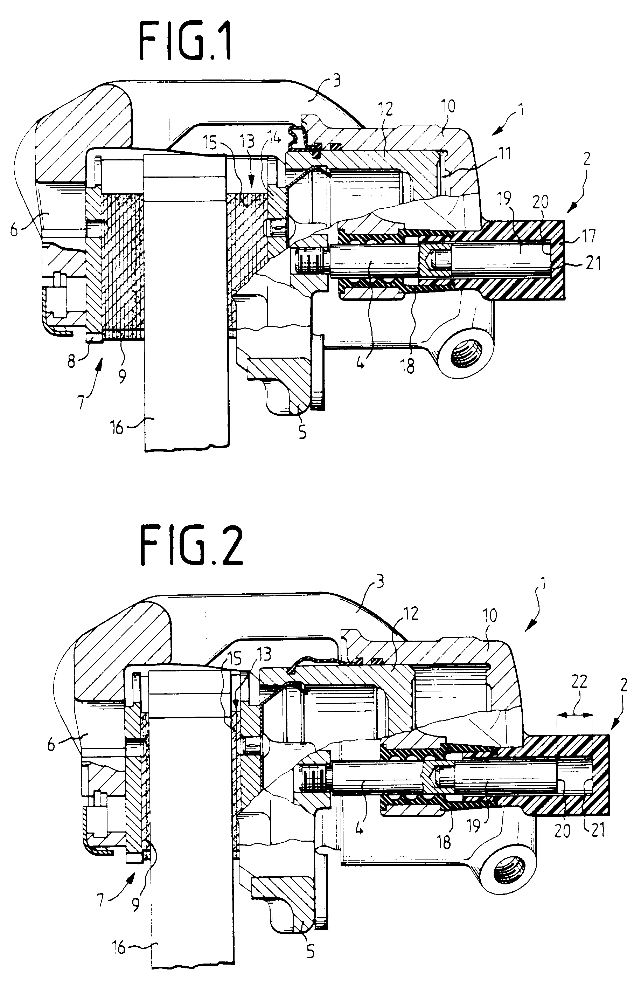

Fig. 1 zeigt eine Teilbelag-Scheibenbremse 1 mit einer Reibbelag-Warneinrichtung 2. Die Teilbelag-Scheibenbremse 1 weist ein Sattelgehäuse 3 auf, das auf einem Bolzen 4 geführt ist. Der Bolzen 4 ist fest in einem Bremsträger 5 verschraubt. An einem äußeren Schenkel 6 des Gehäuses 3 ist ein Bremsbelag 7 angeordnet, der eine Trägerplatte 8 und einen Reibbelag 9 aufweist. Ein innerer Schenkel 10 weist einen Zylinder 11 mit einem Kolben 12 auf, der bei Bremsbetätigung einen aus einer Trägerplatte 14 und einem Reibbelag 15 bestehenden Bremsbelag 13 gegen eine Bremsscheibe 16 drückt. Die Reibbelag-Warneinrichtung 2 weist ein Schaltgehäuse 17 auf, das über eine Dämpfungshülse 18 ortsfest an dem Sattelgehäuse 3 angeordnet ist. Ein Stift 19 der Reibbelag-Warneinrichtung 2 ist ortsfest an dem Bolzen 4 angeordnet. Eine Stirnfläche 20 des Stiftes 19 ist in Anlage an einer Bodenfläche 21 des Schaltgehäuses 17, wenn die Bremsbeläge 7,13 neu und in leichter Berührung mit der Bremsscheibe 16 sind.

Fig. 2 zeigt dieselbe Teilbelag-Scheibenbremse 1 mit Bremsbelägen 7,13, deren Reibbeläge 9,15 verschlissen sind. Der Abstand 22 zwischen der Stirnfläche 20 und der Bodenfläche 21 entspricht dem Belagverschleiß des faustseitigen, äußeren Reibbelages 9.

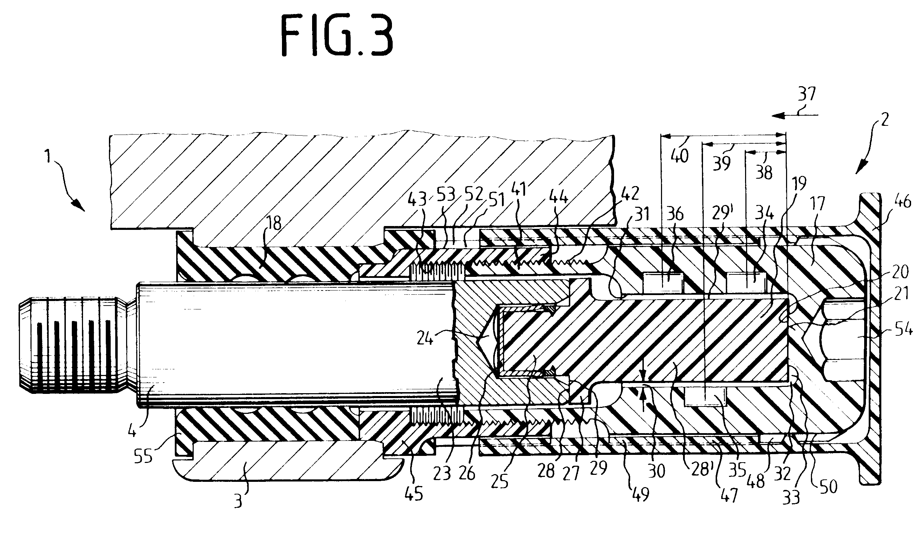

Fig. 3 zeigt die Reibbelag-Warneinrichtung 2, die mit dem Bolzen 4 und dem Sattelgehäuse 3 der Teilbelag-Scheibenbremse 1 zusammenwirkt. Der Bolzen 4 weist an einem dem Bremsträger abgewandten Ende 20 einen Innensechskant 24 auf. Der Stift 19 ist an seinem Stiftende 25 mit einem Federblech 26 in dem Innensechskant 24 an dem Bolzen 4 verankert. Ein sich radial erstreckender und ringförmiger Vorsprung 27 weist eine Anschlagfläche 28 auf, die gegen eine Stirnfläche 29 des Bolzens 4 anliegt. Der Stift 19 ragt mit seinem zylindrischen Abschnitt 28′ in das Schaltgehäuse 17. Die Zylinderoberfläche 29′ ist radial von einer inneren Mantelfläche 31 des Schaltgehäuses 17 durch eine Strecke 30 beabstandet. Das Schaltgehäuse 17 weist an seinem Übergang 32 zwischen Bodenfläche 21 und Mantelfläche 31 eine Kerbe 33 auf, so daß der Stift an diesem Übergang 32 nicht verklemmt und der Stift 19 und das Schaltgehäuse 17 eine Relativbewegung zueinander durchführen können. An der inneren Mantelfläche 31 sind Schalter 34,35 und 36 angeordnet, die bei Bewegung des Stiftes 19 in Richtung 37 auslösen. In einer einfachen Version wird angenommen, daß der Schalter 34 auslöst, wenn der Stift 19 eine Wegstrecke 38 von 4 mm zurückgelegt hat. Die Schalter 35,36 lösen entsprechend nach den Wegstrecken 39 und 40 bei 8 und 12 mm aus. Damit wird eine quasi kontinuierliche Anzeige eines Belagverschleißes möglich. Das Schaltgehäuse 17 umgreift mit seinem axial vorspringenden Abschnitt 41 den Vorsprung 27 und das Bolzenende 23 und wird mit einem Außengewinde 42 auf ein Innengewinde 43 eines Gewindeeinsatzes 44 geschraubt. Der Gewindeeinsatz 43 ist mit seinem Endabschnitt 45 in die Dämpfungshülse 18 eingelagert. Die Dämpfungshülse 18 ummantelt den Bolzen 4 und ist zwischen dem Bolzen 4 und dem Gehäuse 3 angeordnet. Eine Schutzhülse 46 weist axial verlaufende (in dieser Zeichnung nicht sichtbare) Nuten und zugehörige axial verlaufende Vorsprünge 47 auf, die in entsprechend ausgebildete Nuten 48 und Vorsprünge 49 an einer Manteloberfläche 50 des Schaltgehäuses 17 ausgebildet sind. Gleichzeitig greift die Schutzhülse 46 mit ihren Nuten und Vorsprüngen 47 in entsprechend ausgebildete Vorsprünge 51 und Nuten 52 des Gewindeeinsatzes 43, die auf dessen Zylinderaußenfläche 54 ausgebildet sind. Das Schaltgehäuse 17 weist einen Innensechskant 50 auf, mit dessen Hilfe das Schaltgehäuse 17 auf das Gewinde aufschraubbar ist. Ein Toleranzausgleich wird zwischen der Dämpfungshülse 18 und des Schaltgehäuses 17 eingestellt. Die Einstellung geschieht über ein Feingewinde 42,43. Dazu wird die Dämpfungshülse 18 so umgearbeitet, daß sie aus einem Gummiteil 55 und dem Gewindeeinsatzteil 44 besteht. Als Verdrehsicherung (Sicherung der Grundeinstellung) dient die als Sicherungshülse ausgeführte Schutzkappe 46, die in dem Gewindeeinsatzteil 44 und der Hülse 17 in Nuten geführt ist.

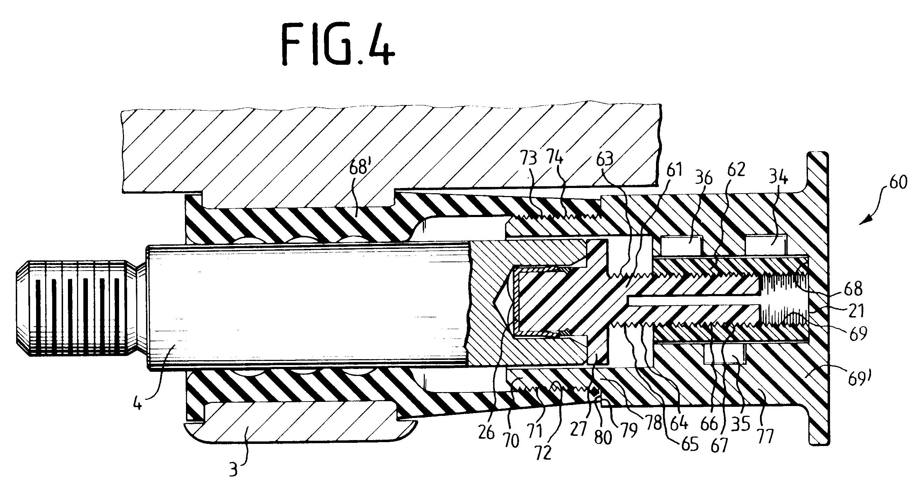

Fig. 4 zeigt eine zweite Reibbelag-Warneinrichtung 60 mit einem Stift 61, auf den eine Buchse 62 aufgesetzt ist. Der Stift 61 ist mit radial vorspringenden ringförmig umlaufenden, an der Oberfläche 63 ausgebildeten Vorsprüngen 64 und dazwischenliegenden Nuten 65 versehen, die in entsprechend ausgebildete Ausbuchtungen 66 und Vorsprünge 67 der Buchse 62 greifen. Ein axial verlaufender Vorsprung 68 des Stiftes 61 verläuft in einer entsprechend ausgebildeten Nut 69 der Buchse 62. Die Buchse 62 weist eine Stirnfläche 68 auf, die gegen die Bodenfläche des Schaltgehäuses 69′ anschlägt. Das Schaltgehäuse 69′ weist im Bereich des Bolzens 4 einen sich axial erstreckenden Rastenabschnitt 70 mit sich radial erstreckenden und ringförmig umlaufenden Vorsprüngen 71 und zugehörigen Nuten 72 auf, die in entsprechend ausgebildete Nuten und Vorsprünge 73 und 74 der Dämpfungshülse 68′ eingreifen. Diese radialen Vorsprünge und Nuten 71-74 sind von einer wahlweise an dem Schaltergehäuse 69′ bzw. der Dämpfungshülse 68′ angeordneten axialen Nut bzw. einem axialen Vorsprung unterbrochen, die ineinandergreifen und eine Verdrehsicherung darstellen. Der Rastenteil 70 ist radial kurz ausgebildet, so daß ein übriger Abschnitt 77 sich in radialer Richtung weiter nach außen erstreckt, so daß sich an einem Übergang 78 eine sich radial ausgerichtete Anschlagfläche 79 für eine Stirnfläche 80 der Dämpfungshülse 68′ ergibt. Ein Toleranzausgleich zwischen dem Führungsbolzen 4 und dem Schaltgehäuse 69′ wird über den Stift 61 und die Buchse 62 vorgenommen. Durch die Rasterung des Stiftes 61 und der Buchse 62 wird es möglich, das Schaltgehäuse 69′ immer bis zum Anschlag in die Dämpfungshüles 68 zu schieben.

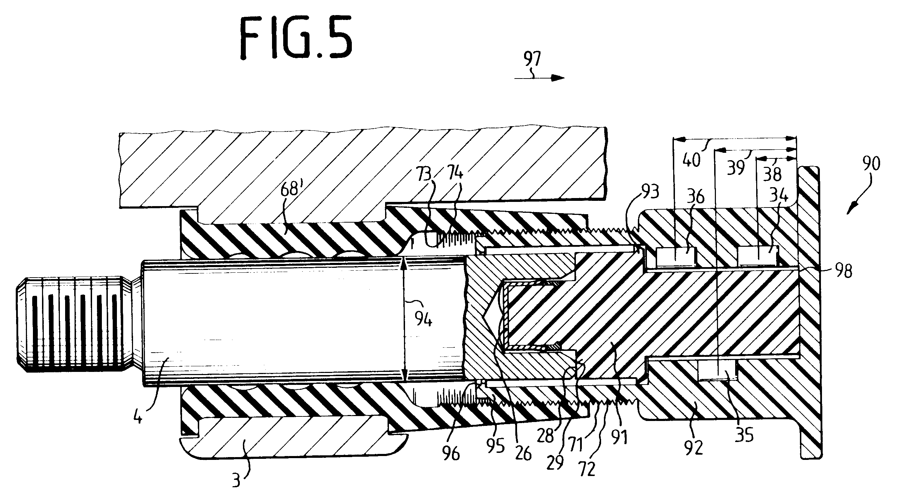

Fig. 5 zeigt eine dritte Reibbelag-Warneinrichtung 90 mit einem Stift 91 und einem Schaltgehäuse 92. Der Stift 91 weist eine sich radial erstreckende ringförmig umlaufende Nase 93 auf, die über den Durchmesser 94 des Bolzens 4 hinausragt. Das Schaltgehäuse 92 weist an seinem offenen Ende 95 eine radial sich nach innen erstreckende Nase 96 auf, die die Nase 93 des Stiftes 91 hintergreift.

Nachfolgend wird die Funktionsweise der Reibbelag-Warnanzeigen näher erläutert.

Der Bremsbelagverschleiß wird indirekt gemessen, indem die Relativbewegung beim Faustsattel zwischen dem Führungsbolzen 4 und dem Gehäuse 3 ausgenutzt wird. Die Verschleißwarnanzeige besteht im wesentlichen aus dem Schaltgehäuse 92, dem Stift 91, dem Federblech 26 und den Schaltern 34,35,36. Der Stift 91 ist über das Federblech 26 fest mit dem Führungsbolzen 4 verbunden und somit ortsfest. Das Schaltgehäuse 92 trägt die Schalter 34,35 und 36 und ist über die Dämpfungshülse 68 mit dem Gehäuse 3 verbunden und bewegt sich somit bei Belagverschleiß in die angegebene Bewegungsrichtung 97. Damit ändert sich kontinuierlich der Abstand der Schalter 34,35,36 zu einer hinteren Kante 98 des Stiftes 91. Diese Kante 98 kann nun zur Auslösung der Schalter (z.B. mechanisch, induktiv etc.) benutzt werden. Durch die Anzahl der Schalter und die Lage in der Hülse 92 können die verschiedensten Schaltpunkte gewählt werden. Die Wegstrecken 38,39 und 40 entsprechen dabei 4, 8 und 12 mm Belagverschleiß, bei denen gewarnt wird. Bei der Montage sind eine Grundeinstellung und ein Toleranzausgleich zu berücksichtigen. Bei neuen Belägen muß das Schaltgehäuse 92 an dem Stift 98 anliegen (Grundeinstellung). Dann besitzen die Schalter 34 bis 36 einen definierten Abstand vom Ende des Stiftes 91 bzw. der Kante 98, der dem Verschleiß entspricht, bei dem gewarnt werden soll. Die Wegstrecken 38,39 und 40 entspechen dem Belagverschleiß und einem ersten, zweiten und einem dritten Warnpunkt. Da der Abstand zwischen der Dämpfungshülse 68 und dem Führungsbolzen 4 von der Fertigungstoleranz abhängig ist, muß diese Toleranz ausgeglichen werden, um die Grundeinstellung zu erreichen. Dies geschieht bei der Reibbelag-Warneinrichtung 90 über die Rasterung 71 bis 74 an dem Schaltgehäuse 92 und der Dämpfungshülse 68 in entsprechenden Raststufen. Bei der Montage wird die Verschleißanzeige in die Dämpfungshülse 68 eingedrückt, bis der Stift 91 vollständig in dem Bolzen 4 (auf Anschlag) sitzt. Dabei stoßen die Flächen 28 und 29 zusammen. Durch das Eindrücken liegt auch die Hülse 92 an dem Stift 91 an, so daß die Grundeinstellung gewährleistet ist. Damit die Verschleißwarnanzeige 90 eine Einheit bildet und sich die Hülse 92 und der Stift 91 nicht voneinander lösen, ist an beiden Teilen eine Rastnase 93 bzw. 96 vorgesehen. Zum Belagwechsel wird die Warnanzeige durch Herausziehen des Schaltgehäuses 92 ausgebaut. Durch die oben angeführten Nasen wird dabei auch der Stift 91 aus dem Führunsbolzen 4 gezogen, so daß die Verschleißwarnanzeige 90 eine Einheit bleibt.

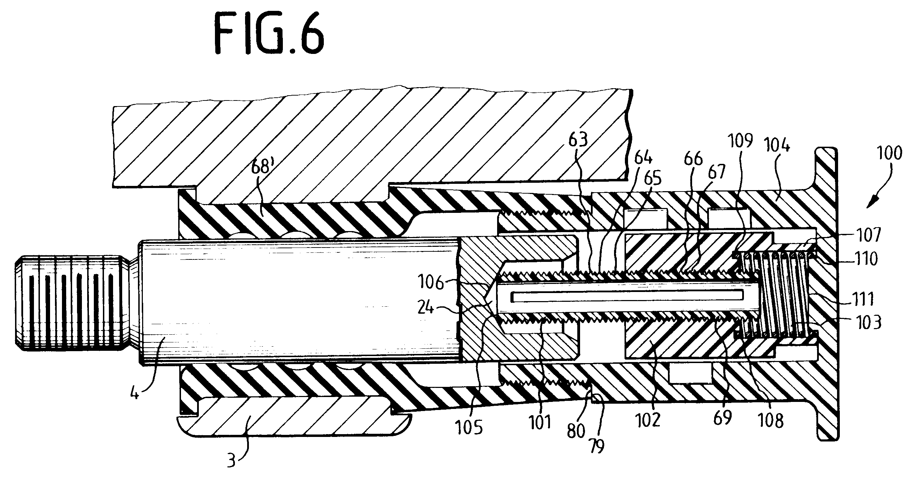

Fig. 6 zeigt eine Reibbelag-Warneinrichtung 100 mit einem Stift 101 und einer Buchse 102. Der Stift wird mit Hilfe einer Feder 103, die zwischen dem Schaltgehäuse 104 und der Buchse 102 angeordnet ist, mit seiner Stirnfläche 105 gegen eine Bodenfläche 106 des Innensechskantes 24 gedrückt und dort gehalten. Der Stift 101 und die Buchse 102 sind über Rasten 63 bis 66 und 68,69 in axialer und radialer Lage gesichert. Die Buchse 102 weist einen Mantelabschnitt 107 auf, der die Feder 103 hüllenartig umgibt. Ein Federende 108 ist in eine entsprechende ringförmig umlaufende Nut der Buchse 102 festgeklemmt. Das gegenüberliegende Federende 110 sitzt auf einem kreisförmigen Vorsprung 111 des Schaltgehäuses 104 auf.

Nachfolgend ist die Funktion näher erläutert.

Bei dieser Variante wurde auf die Befestigung des Stiftes 101 im Führungsbolzen 4 verzichtet. Dafür wird die als Schaltteil ausgebildete Buchse 102 über den Taststift 101 mit Federkraft am Führungsbolzen 4 gehalten. Der Toleranzausgleich erfolgt wie bei der Reibbelag-Warnanzeige 60 in Fig. 4 zwischen dem Stift 61 und der Buchse 62. Die Verschleißanzeige 100 wird als ein Teil montiert. Zur Grundeinstellung wird zunächst das Schaltgehäuse 104 in die ersten Rasten der Dämpfungshülse 68 eingedrückt. Dabei kommt der Taststift 101 im Innensechskant des Führungsbolzens 4 zur Anlage. Beim weiteren Eindrücken der Hülse 104 wird nun die Feder 103 zusammengedrückt, bis die Buchse 102 an der Bodenfläche 21 anliegt. Dies entspricht der Grundeinstellung der Schaltpunkte. Das Schaltgehäuse 104 wird nun bis zum Anschlag der Flächen 79 und 80 in die Dämpfungshülse 68′ eingedrückt. Da die Buchse 102 und das Schaltgehäuse 104 bereits auf Anschlag sind, erfolgt der Toleranzausgleich nun über die Rasterung 63 bis 66 des Taststiftes 101 und der Buchse 102.

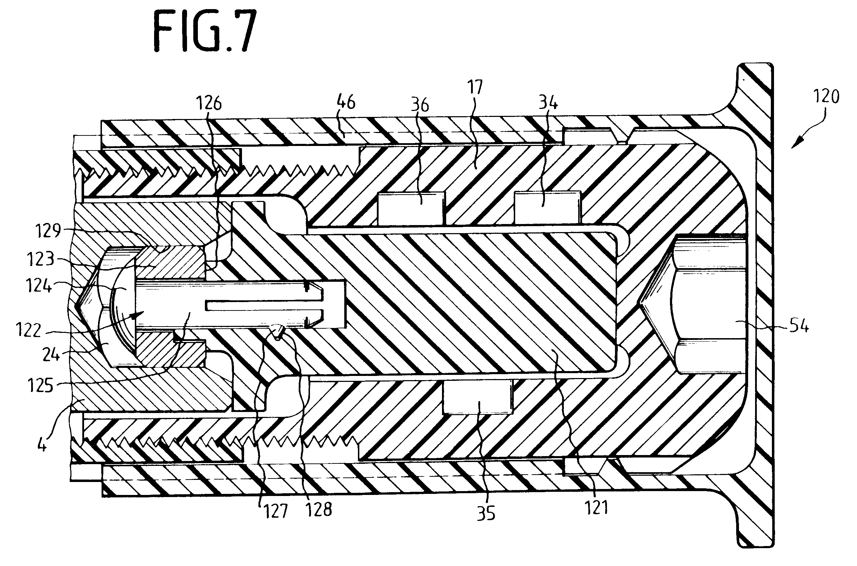

Fig. 7 zeigt eine Reibbelag-Warneinrichtung 120 mit einem Stift 121, der mit Hilfe eines Nietes 122 und eines Klemmstückes 123 in dem Innensechskant 24 des Führungsbolzens 4 verklemmbar ist. Der Niet 122 weist einen Kopf 124 und einen Schaft 125 auf, der durch eine Bohrung des Klemmstückes 122 geführt ist. Der Kopf 124 hält dabei das Klemmstück 122 in Anlage an der Stirnfläche 126 des Stiftes 121. Der Schaft 125 ist mit einer Nase 127 in einer entsprechend ausgebildeten Nut 128 des Stiftes 121 eingesetzt und im Stift gehalten. Das Klemmstück 123 verklemmt mit seiner zylindrischen Oberfläche in dem Innensechskant 24.

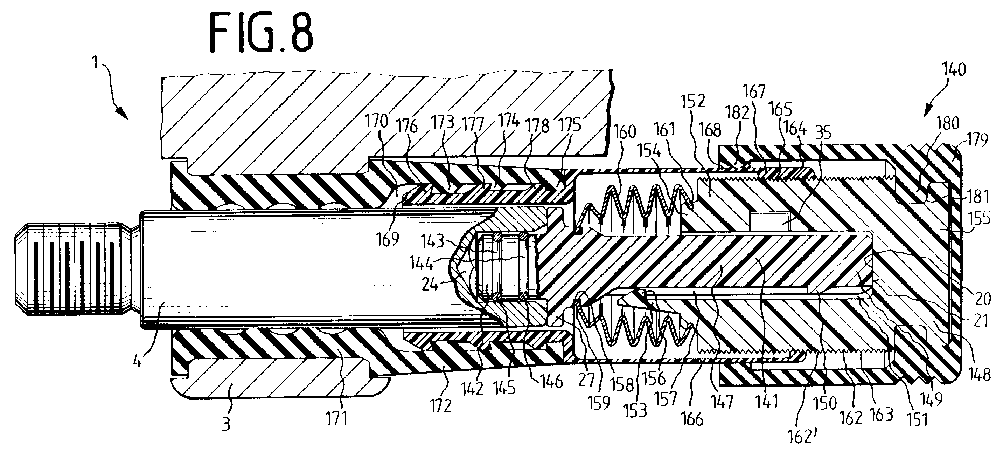

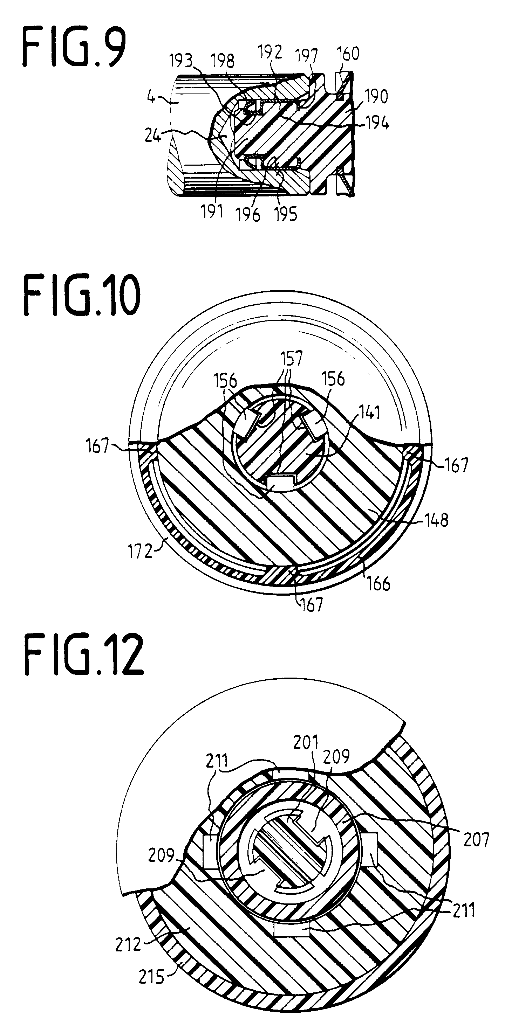

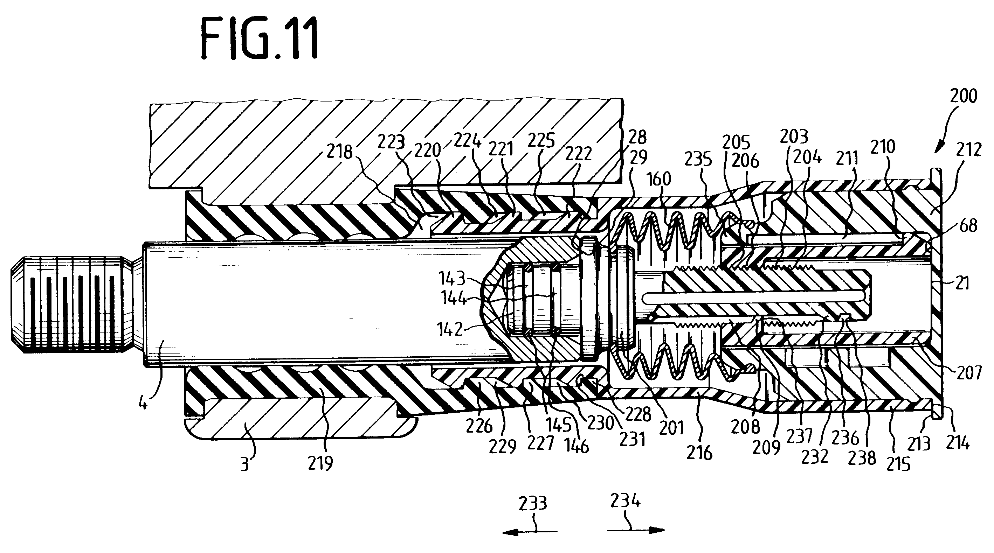

Fig. 8 und 10 zeigen eine Reibbelag-Warneinrichtung 140 mit einem Stift 141. Der Stift 141 weist einen Endabschnitt 142 mit Nuten 143,144 auf, in denen Sprengringe 145,146 eingelassen sind. Der Endabschnitt 142 ragt in den Innensechskant 24 des Bolzens 4 und hält mit Hilfe der Sprengringe 145,146 den Stift 141 in Anlage an den Bolzen 4. Der Stift 141 ragt mit seinem Zylinderteil 147 in ein Schaltgehäuse 148 und liegt mit seiner Stirnfläche 20 in Anlage an der Bodenfläche 21 des Schaltgehäuses 148. An einem Ende 149 des Zylinderteiles 147 weist der Stift eine Nase 150 auf, die in einer Nut 151 des Schaltgehäuses 148 gleitet. Das Schaltgehäuse 148 umschließt mit einem Mantelteil 152 den Zylinderteil 147 des Stiftes 141 in axialer Länge zu etwa zwei Dritteln. Das Schaftteil 152 erstreckt sich in radialer Richtung so, daß es die Schalter 34 bis 36 aufnehmen kann. An einem sich in axialer Richtung erstreckenden Vorsprung 153, der einem Bodenteil 155 an einem Schaftende 154 gegenüberliegt, ist eine Nase 156 angeordnet, die in einer sich axial erstreckenden, entsprechend ausgebildeten Nut 157 des Stiftes 141 hineinragt. Wird die Reibbelag-Warneinrichtung 140 von der Teilbelag-Scheibenbremse 1 entfernt, so verhaken die Nasen 150 und 156 hintereinander und der Stift 141 wird mitsamt der Hülse 148 von dem Bolzen 4 abgezogen. Angrenzend an dem Vorsprung 27 ist eine Nut 158 ausgebildet, die eine Verdickung 159 einer Manschette 160 aufnimmt. Das gegenüberliegende Ende 161 der Manschette 160 wird in einer sich radial erstreckenden umlaufenden Nut in dem Schaftende 154 des Schaltgehäuses 148 festgelegt. Damit sind die Schalter 34 bis 36, die in dem Schaltgehäuse 148 eingelassen sind und mit dem Stift 141 zusammenwirken, durch die Manschette 161 gegen Verschmutzung gesichert. Das Schaltgehäuse 148 weist an seiner zylinderförmigen Schaftaußenfläche 162′ radial erstreckende umlaufende Nuten und Vorsprünge 162 und 163 auf, die in entsprechend ausgebildete Nuten 164 und Vorsprünge 165 eines Sensorgehäuses 166 hineinragen. Dabei sind zwei Vorsprünge 165 ringförmig umlaufend und weitere Vorsprünge 165 auf axial ausgerichteten Stegen 167 ausgebildet. Das Sensorgehäuse 166 gliedert sich im wesentlichen in einen Abschnitt 168, der den Stift 141 und das Schaltgehäuse 148 ummantelt und einen Abschnitt 169, der in eine Öffnung 170 einer Dämpfungshülse 171 hineinragt. Die Dämpfungshülse 171 weist in ihrem Abschnitt 172 sich radial nach innen erstreckende ringförmig umlaufende Widerhaken 173,174 und 175 auf, die in entsprechend ausgeformte Widerhaken 176,177 und 178 des Sensorgehäuses 166 eingreifen, die ringförmig umlaufen und sich radial nach außen erstrecken. Eine Schutzhülse 179 ragt mit einam radial sich nach innen erstreckenden ringförmigen Vorsprung 180 in eine entsprechend ausgebildete Nut 181 des Schaltgehäuses 148 und ist somit an diesem befestigt. Die Schutzhülse 179 weist einen Schaftteil 181 auf, dessen radial nach innen vorspringendes Ende auf einer Zylinderaußenfläche des Sensorgehäuses 166 im Abschnitt 168 aufliegt.

Fig. 9 zeigt einen Stift 190, der mit seinem Ende 191 in dem Bolzen 4 befestigt ist. Dazu weist das Ende 191 ein Federblech 192 auf, das federnd in dem Innensechskant 24 des Bolzens 4 verhakt. Das Federblech 192 ist ringförmig um das Stiftende 191 gelegt und weist im Querschnitt im wesentlichen eine S-Form mit zwei Bäuchen 193 und 194 auf. Der Bauch 194 liegt mit seiner äußeren Mantelfläche 195 gegen den Innensechskant und mit seiner inneren Mantelfläche 196 gegen das Stiftende 191 an. Ein Federblechende 197 ist in einer entsprechend ausgebildeten Nut des Stiftendes 191 verklemmt. Der Bauch 193 weist ein zweites Endteil 198 in Form eines Widerhakens auf, so daß der Stift 190 zwar leicht in den Innensechskant 24 eingeführt, aber schwieriger wieder herausziehbar ist.

Fig. 11 und 12 zeigen eine Reibbelag-Warneinrichtung 200 mit einem Stift 201, der ortsfest mit dem Bolzen 4 verbunden ist. Der Stift 201 weist einen Schaft 202 auf, der über ringförmige, sich radial erstreckende Vorsprünge 203 und Nuten 204 in entsprechende Vorsprünge 205 und Nuten 206 einer auf dem Stift 102 aufgesetzten Buchse 207 rasten. Die Vorsprünge 203 und 204 des Stiftes 201 sind durch eine Axialnut 208 unterbrochen, in der eine entsprechend ausgebildete Nase 209 der Buchse 207 gleitet. Die Buchse 207 weist eine weitere Nase 210 auf, die in einer entsprechenden Nut 211 eines Schaltgehäuses 212 eingreift. Das Schaltgehäuse 212 liegt mit einer Deckelfläche 213 gegen eine Stirnfläche 214 eines Sensorgehäuses 215 auf axialem Anschlag. Das Sensorgehäuse 215 weist einen mantelförmigen Abschnitt 216, der im wesentlichen das Schaltgehäuse 212 und den Schaftteil 202 des Stiftes 201 ummantelt, und einen innenliegenden Hakenabschnitt 217 auf, der in eine Öffnung 218 einer Dämpfungshülse 219 hineinragt und mit radialen Vorsprüngen 220 bis 222 lösbar in entsprechend ausgebildete Nuten der Dämpfungshülse 219 eingreift. Entsprechend greifen Haken 226,227 und 228 der Dämpfungshülse 219 in dafür vorgesehene Nuten 229 bis 231 des Sensorgehäuses 215.

Nachfolgend ist die Funktion näher erläutert.

Bei Einsetzen der Reibbelag-Warneinrichtung 200 in die Dämpfungshülse 219 wird zunächst die Buchse 207 an das äußere Schaftende 202 aufgesetzt, so daß die Nasen 209 und 232 einander berühren und die Nase 205 in eine Ausnehmung 236 einrastet. In dieser Montageposition schlagen radial ausgerichtete Flächen 237,238 der Buchse 207 und des Stiftes 201 aneinander an. Danach wird die Reibbelag-Warneinrichtung 233 bewegt, bis die Stirnflächen 28 und 29 des Stiftes 201 und des Bolzens 4 aneinander anschlagen. Damit ist der Stift 201 in dem Bolzen 4 durch seinen Endabschnitt 142 mit Hilfe der beiden Sprengringe 145 und 146 in dem Bolzen 4 gesichert. Das Schaltgehäuse 212 und das Sensorgehäuse 215 sind bereits miteinander verklemmt und die Anschlagflächen 213 und 214 aufeinandergefahren. Dann wird das Sensorgehäuse 215 mit seinen Vorsprüngen 220 so weit in die Dämpfungshülse 219 eingesetzt, bis die Vorsprünge 220 bis 222 in die entsprechenden Nuten 222 bis 225 einrasten. Dabei wird gleichzeitig die Buchse 207 über die Bodenfläche 21 und die Stirnfläche 68 in Richtung 233 über die rastenden Vorsprünge 203 des Stiftes 202 bewegt. Zur Demontage wird das Schaltgehäuse 212 in Richtung 234 bewegt und nimmt über die Nasen 210 und 235 die Buchse 207 und gleichzeitig über die Nase 209, die in die Ausnehmung 236 einrastet, den Stift 201 in Richtung 234 mit. Bei der Montage setzt sich der Stift 201 erst in den Innensechskant 24, bevor die Nase 209 über die Nase 232 aus ihrer Montageposition in der Ausnehmung 236 über die Nase 232 springt und bei Weitereindrücken der Warnanzeige 200 die Toleranz ausgeglichen wird. Bei der Demontage wird die Buchse 207 zuerst wieder durch die Nasen 210 und 235 in die oben genannte Montage- und Demontageposition gebracht, bevor der Stift 201 durch die Anschlagflächen 237,238 aus dem Innensechskant 24 gezogen wird. Damit ist der Sensor für die Wiedermontage bereits wieder in der richtigen Position.

### Bezugszeichenliste

- 1: Teilbelag-Scheibenbremse
- 2: Reibbelag-Warneinrichtung
- 3: Gehäuse
- 4: Bolzen
- 5: Bremsträger
- 6: Schenkel
- 7: Bremsbelag
- 8: Trägerplatte
- 9: Reibbelag
- 10: Schenkel
- 11: Zylinder
- 12: Kolben
- 13: Bremsbelag
- 14: Trägerplatte
- 15: Reibbelag
- 16: Bremsscheibe
- 17: Schaltgehäuse
- 18: Dämpfungshülse
- 19: Stift
- 20: Stirnfläche
- 21: Bodenfläche
- 22: Abstand
- 23: Bolzenende
- 24: Innensechskant
- 25: Stiftende
- 26: Federblech
- 27: Vorsprung
- 28: Zylinder
- 28′: zylindrischer Abschnitt
- 29: Zylinderfläche
- 30: Abstand
- 31: Mantelfläche
- 32: Übergang
- 33: Kerbe
- 34: Schalter
- 35: Schalter
- 36: Schalter
- 37: Richtung
- 38: Wegstrecke
- 39: Wegstrecke
- 40: Wegstrecke
- 41: Hülsenabschnitt
- 42: Außengewinde
- 43: Innengewinde
- 44: Gewindeeinsatz
- 45: Endabschnitt
- 46: Schutzhülse
- 47: Vorsprünge
- 48: Nut
- 49: Vorsprung
- 50: Zylinderfläche
- 51: Vorsprung
- 52: Nut
- 53: Zylinderfläche
- 54: Innensechskant
- 55: Gummiteil
- 56:
- 57:
- 58:
- 59:
- 60: Reibbelag-Warneinrichtung
- 61: Stift
- 62: Buchse
- 63: Oberfläche
- 64: Vorsprung
- 65: Nut
- 66: Ausbuchtung
- 67: Vorsprung
- 68: Stirnfläche
- 68′: Dämpfungshülse
- 69: Hülse
- 69′: Schaltgehäuse
- 70: Rastenabschnitt
- 71: Vorsprung
- 72: Nut
- 73: Vorsprung
- 74: Nut
- 75: Nut
- 76: Vorsprung
- 77: Hülsenabschnitt
- 78: Übergang
- 79: Anschlagfläche
- 80: Stirnfläche
- 81:
- 82:
- 83:
- 84:
- 85:
- 86:
- 87:
- 88:
- 89:
- 90: Reibbelag-Warneinrichtung
- 91: Stift
- 92: Schaltgehäuse
- 93: Nase
- 94: Bolzendurchmesser
- 95: Ende
- 96: Nase
- 97: Richtung
- 98: Kante
- 99:
- 100: Reibbelag-Warneinrichtung
- 101: Stift
- 102: Buchse
- 103: Feder
- 104: Schaltgehäuse
- 105: Stirnfläche
- 106: Bodenfläche
- 107: Mantelabschnitt
- 108: Federende
- 109: Nut
- 110: Federende
- 111: Vorsprung
- 120: Reibbelag-Warneinrichtung
- 121: Stift
- 122: Niet
- 123: Klemmstück
- 124: Nietkopf
- 125: Nietschaft
- 126: Stirnfläche
- 127: Nase
- 128: Nut
- 129: Zylinderoberfläche
- 140: Reibbelag
- 141: Stift
- 142: Endabschnitt
- 143: Nut
- 144: Nut
- 145: Sprengring
- 146: Sprengring
- 147: Zylinderteil
- 148: Schaltgehäuse
- 149: Zylinderende
- 150: Nase
- 151: Nut
- 152: Schatteil
- 153: Vorsprung
- 154: Schaftende
- 155: Bodenteil
- 156: Nase
- 157: Nut
- 158: Nut
- 159: Verdickung
- 160: Manschette
- 161: Manschettenende
- 162: Nut
- 162: Schaftaußenfläche
- 163: Vorsprung
- 164: Nut
- 165: Vorsprung
- 166: Sensorgehäuse
- 167: Steg
- 168: Abschnitt
- 169: Abschnitt
- 170: Öffnung
- 171: Dämpfungshülse
- 172: Abschnitt
- 173: Widerhaken
- 174: Widerhaken
- 175: Widerhaken
- 176: Widerhaken
- 177: Widerhaken
- 178: Widerhaken
- 179: Schutzhülse
- 181: Schaftteil
- 182: Vorsprung
- 190: Stift
- 191: Stiftende
- 192: Federblech
- 193: Bauch
- 194: Bauch
- 195: Mantelfläche
- 196: innere Mantelfläche
- 197: Federblechende
- 198: Endteil
- 200: Reibbelag-Warneinrichtung
- 201: Stift
- 202: Schaft
- 203: Vorsprung
- 204: Nut
- 205: Vorsprung
- 206: Nut
- 207: Buchse
- 208: Axialnut
- 209: Nase
- 210: Nase
- 211: Nut
- 212: Schaltgehäuse
- 213: Deckelfläche
- 214: Stirnfläche
- 215: Sensorgehäuse
- 216: Mantelabschnitt
- 217: Hakenabschnitt
- 218: Öffnung
- 219: Dämpfungshüle
- 220: Vorsprung
- 221: Vorsprung
- 222: Vorsprung
- 223: Nut
- 224: Nut
- 225: Nut
- 226: Vorsprung
- 227: Vorsprung
- 228: Vorsprung
- 229: Nut
- 230: Nut
- 231: Nut
- 232: Nase
- 233: Richtung
- 234: Richtung
- 235: Nase
- 236: Ausnehmung
- 237: Fläche
- 238: Fläche

## Patentansprüche

1. Reibbelag-Warneinrichtung für eine bolzengeführte Teilbelag-Scheibenbremse (1), deren Sattelgehäuse (3) bzw. Bremsträger (5) gleitend an einem Bolzen (4) angeordnet ist, mit einem Stift (19,61,91,101,121,141,190,201), der in eine Öffnung des Bolzens (4) greift und fluchtend zu diesem angeordnet ist, mit einem den Stift (19,61,91,101,121,141,190,201) umgebenden Schaltgehäuse (17,69',92,104,148,212), das mit dem Sattelgehäuse (3) bzw. Bremsträger (5) verbunden ist, wobei der Bolzen (4) und der Stift (19,61,91,101,121,141,190,201) gegenüber dem Schaltgehäuse (17,69',92,104,148,212) und dem Sattelgehäuse (3) bzw. dem Bremsträger (5) relativ bewegbar sind und mit elektrischen Schaltern (34,35,36) im Stift (19,61,91,101,121,141,190,201) bzw. im Schaltgehäuse, (17,69',92,104,148,212) die auslösen, wenn der Stift (19,61,91,101,121,141,190,201) gegenüber dem Schaltgehäuse (17,69',92,104,148,212) eine vorbestimmte Wegstrecke (38,39,40) zurückgelegt hat, wobei das Schaltgehäuse (17,69',92,104,148,212) und der Stift (19,61,91,101,121,141,190,201) auf Anschlag zueinander bringbar sind und eine Grundstellung einnehmen und wobei, wenn die Grundstellung eingenommen ist, das Schaltgehäuse (17,69',92,104,148,212) mit dem Sattelgehäuse (3) bzw. dem Bremsträger (5) innerhalb eines Toleranzbereiches verbindbar ist, dadurch **gekennzeichnet,** daß der Stift (19,61,91,101,121,141,190,201) einen Anschlag mit einer Stirnfläche (29,105) aufweist, die axial an dem Bolzen (4) anlegbar ist.

2. Reibbelag-Warneinrichtung nach Anspruch 1, dadurch **gekennzeichnet,** daß der Stift (19,61,91,121,141,190,201) einen ringförmig umlaufenden Vorsprung (27) mit einer radial ausgerichteten Fläche (29) aufweist, die den Anschlag bildet.

3. Reibbelag-Warneinrichtung nach Anspruch 1 oder 2, dadurch **gekennzeichnet,** daß der Stift (19,91,121,141,190) eine weitere Stirnfläche (20) aufweist, gegen die das Schaltgehäuse (17,92,148) mit einer Bodenfläche (21) anschlagbar ist.

4. Reibbelag-Warneinrichtung nach einem der vorhergehenden Ansprüche, dadurch **gekennzeichnet**, daß zwischen dem Stift (141,201) und dem Schaltgehäuse (148,212) eine Manschette (160) angeordnet ist.

5. Reibbelag-Warneinrichtung nach einem der vorhergehenden Ansprüche, dadurch **gekennzeichnet**, daß das Schaltgehäuse (17,69′,92,104,148,212) an einer Dämpfungshülse (18,44,68′,171,219) angeordnet ist, die den Bolzen (4) mantelförmig umgibt und in einer Öffnung des Sattelgehäuses (3) bzw. des Bremsträgers (5) zwischen dem Bolzen (4) und dem Sattelgehäuse (3) bzw. Bremsträger (5) angeordnet ist.

6. Reibbelag-Warneinrichtung nach einem der vorhergehenden Ansprüche, dadurch **gekennzeichnet**, daß das Schaltgehäuse (17) ein Gewinde (42) aufweist, das auf ein entsprechendes Gegengewinde (43) der Dämpfungshülse (18,44) aufschraubbar ist.

7. Reibbelag-Warneinrichtung nach einem der vorhergehenden Ansprüche, dadurch **gekennzeichnet**, daß die Dämpfungshülse (18,44) zweiteilig ist und einen Gewindeeinsatz (44) mit Gewinde (43) aufweist.

8. Reibbelag-Warneinrichtung nach einem der vorhergehenden Ansprüche, dadurch **gekennzeichnet**, daß eine Schutzhülse (46) axial ausgerichtete Vorsprünge (47) aufweist, die in axial ausgerichtete Nuten (48) des Gewindeeinsatzes (44) und des Schaltgehäuses (17) eingreifen.

9. Reibbelag-Warneinrichtung nach einem der vorhergehenden Ansprüche, dadurch **gekennzeichnet**, daß das Schaltgehäuse (69′,92,104,148) rastenförmig ausgebildete, ringförmig umlaufende Vorsprünge (71,163) aufweist.

10. Reibbelag-Warneinrichtung nach einem der vorhergehenden Ansprüche, dadurch **gekennzeichnet**, daß die Dämpfungshülse (68′) ringförmig umlaufenden Nuten (73) aufweist, in die die Vorsprünge (71) des Schaltgehäuses (68′) einrastbar sind.

11. Reibbelag-Warneinrichtung nach einem der vorhergehenden Ansprüche, dadurch **gekennzeichnet**, daß das Schaltgehäuse (148,212) zweistückig ausgebildet ist und ein Sensorgehäuse (166,215) mit Vorsprüngen (176,177,178,220,221,222) aufweist.

12. Reibbelag-Warneinrichtung nach einem der vorhergehenden Ansprüche, dadurch **gekennzeichnet**, daß der Stift (61,62,201,207) eine Buchse (62,207) aufweist.

13. Reibbelag-Warneinrichtung nach Anspruch 12, dadurch **gekennzeichnet**, daß die Buchse (62,207) reibschlüssig auf dem Stift (61,201) verklemmt.

14. Reibbelag-Warneinrichtung nach Anspruch 12, dadurch **gekennzeichnet**, daß die Buchse (62,207) Vorsprünge (67,205) und Nuten (66,206) aufweist, die in entsprechend ausgebildete Nuten (64,204) und Vorsprüngen (63,203) des Stiftes (61,201) rasten.

15. Reibbelag-Warneinrichtung nach einem der Ansprüche 12-14, dadurch **gekennzeichnet**, daß der Stift (61,201) und die Buchse (62,207) eine Axialnut (68,208) und einen Axialvorsprung (6,209) aufweisen, die ineinandergreifen.

16. Reibbelag-Warneinrichtung nach einem der vorhergehenden Ansprüche, dadurch **gekennzeichnet**, daß das Schaltgehäuse (92,148,212) an einem offenen Ende (95,154) eine radial nach innen gerichtete Nase (96,156,235) aufweist, die eine radial nach außen gerichtete Nase (93,150,210) des Stiftes (91,141,201,207) hintergreift.

17. Reibbelag-Warneinrichtung nach Anspuch 12, dadurch **gekennzeichnet**, daß die Buchse (102) eine Feder (103) aufnimmt, die sich an dem Schaltgehäuse (104) abstützt und den Stift (101,102) in Anlage an den Bolzen (4) hält.

18. Reibbelag-Warneinrichtung nach einem der vorhergehenden Ansprüche, dadurch **gekennzeichnet**, daß der Stift (19,61,91,190) ein Federblech (26,192) aufweist, das den Stift (19,61,91,190) in dem Bolzen (4) verklemmt.

19. Reibbelag-Warneinrichtung nach einem der vorhergehenden Ansprüche, dadurch **gekennzeichnet**, daß auf dem Stift (141,201) ein Federring (145,146) angeordnet ist, der den Stift (141,201) in dem Bolzen (4) verklemmt.

20. Reibbelag-Warneinrichtung nach einem der vorhergehenden Ansprüche, dadurch **gekennzeichnet**, daß der Stift (121) ein Klemmstück (123) aufweist, das in dem Bolzen (4) verklemmbar und von einem Niet (122) gehalten ist.

## Claims

1. A friction lining warning device for a pin-guided spot-type disc brake (1), whose caliper housing (3) or, respectively, brake caliper (5) is slidingly arranged at a pin (4), comprising a stud (19, 61, 91, 101, 121, 141, 190, 201) which engages an opening of the pin (4) and is arranged in alignment with the latter, with a switch housing (17, 69', 92, 104, 148, 212) surrounding the stud (19, 61, 91, 101, 121, 141, 190, 201) and being connected to the caliper housing (3) or the brake carrier (5), respectively, the pin (4) and the stud (19, 61, 91, 101, 121, 141, 190, 201) being movable relative to the switch housing (17, 69', 92, 104, 148, 212) and the caliper housing (3) or the brake carrier (5), respectively, comprising electric switches (34, 35, 36) in the stud (19, 61, 91, 101, 121, 141, 190, 201) or the switch housing (17, 69', 92, 104, 148, 212), respectively, which release when the stud (19, 61, 91, 101, 121, 141, 190, 201) has travelled a predetermined distance in respect of the switch housing (17, 69', 92, 104, 148, 212), the switch housing (17, 69', 92, 104, 148, 212) and the stud (19, 61, 91, 101, 121, 141, 190, 201) being movable into abutment with one another and assuming a basic position, the switch housing (17, 69', 92, 104, 148, 212) being connectible to the caliper housing (3) or the brake carrier (5), respectively, within a range of tolerances when the basic position has been adopted,
**characterized** in that the stud (19, 61, 91, 101, 121, 141, 190, 201) is provided with a stop having a front surface (29, 105) which is axially abuttable with the pin (4).

2. A friction lining warning device as claimed in claim 1,
**characterized** in that the stud (19, 61, 91, 101, 121, 141, 190, 201) is provided with a ring-shaped circumferential projection (27) with a radially directed surface (29) which forms the stop.

3. A friction lining warning device as claimed in claim 1 or 2,
**characterized** in that the stud (19, 91, 121, 141, 190) is provided with another front surface (20) against which the switch housing (17, 92, 148) is abuttable with a bottom surface (21).

4. A friction lining warning device as claimed in any one of the preceding claims,
**characterized** in that a cup (160) is arranged between the stud (141, 201) and the switch housing (148, 212).

5. A friction lining warning device as claimed in any one of the preceding claims,
**characterized** in that the switch housing (17, 69', 92, 104, 148, 212) is arranged at a damping bushing (18, 44, 68', 171, 219) which surrounds the pin (4) like a shell and which is arranged in an opening in the caliper housing (3) or the brake carrier (5), respectively, between the pin (4) and the caliper housing (3) or the brake carrier (5), respectively.

6. A friction lining warning device as claimed in any one of the preceding claims,
**characterized** in that the switch housing (17) is provided with a thread (42) which is screwable onto a matching counterthread (43) of the damping bushing (18, 44).

7. A friction lining warning device as claimed in any one of the preceding claims,
**characterized** in that the damping bushing (18, 44) is two-part and is furnished with a threaded insert (44) with a thread (43).

8. A friction lining warning device as claimed in any one of the preceding claims,
**characterized** in that a protective bushing (46) is formed with axially directed projections (47) which engage axially directed grooves (48) of the threaded insert (44) and of the switch housing (17).

9. A friction lining warning device as claimed in any one of the preceding claims,
**characterized** in that the switch housing (69', 92, 104, 148) is furnished with projections (71, 163) which have a notch-shaped configuration and are arranged circumferentially in a ring-shaped manner.

10. A friction lining warning device as claimed in any one of the preceding claims,
**characterized** in that the damping bushing (68') is formed with grooves (73) which are arranged circumferentially in a ring-shaped manner and into which the projections (71) of the switch housing (69') are lockable.

11. A friction lining warning device as claimed in any one of the preceding claims,
**characterized** in that the switch housing (148, 122) is configured two-part and is provided with a sensor housing (166, 215) with projections (176, 177, 178, 220, 221, 222).

12. A friction lining warning device as claimed in any one of the preceding claims,
**characterized** in that the stud (61, 62, 201, 207) is provided with a bushing (62, 207).

13. A friction lining warning device as claimed in claim 12,
**characterized** in that the bushing (62, 207) clamps on the stud (61, 201) in a friction-type locking fit.

14. A friction lining warning device as claimed in claim 12,
**characterized** in that the bushing (62, 207) is formed with projections (67, 205) and grooves (66, 206) which become locked in correspondingly formed grooves (64, 204) and projections (63, 203) of the stud (61, 201).

15. A friction lining warning device as claimed in any one of claims 12 to 14,
**characterized** in that the stud (61, 201) and the bushing (62, 207) present an axial groove (68, 208) and an axial projection (6, 209) which engage each other.

16. A friction lining warning device as claimed in any one of the preceding claims,
**characterized** in that at an open end (95, 154) the switch housing (92, 148, 212) is furnished with a radially inwardly directed nose (96, 156, 235) which makes catch behind a radially outwardly directed nose (93, 150, 210) of the stud (91, 141, 201, 207).

17. A friction lining warning device as claimed in claim 12,
**characterized** in that the bushing (102) accommodates a spring (103) which takes support at the switch housing (104) and keeps the stud (101, 102) in abutment with the pin (4).

18. A friction lining warning device as claimed in any one of the preceding claims,
**characterized** in that the stud (19, 61, 91, 190) is furnished with a spring plate (26, 192) which clamps the stud (19, 61, 91, 190) in the pin (4).

19. A friction lining warning device as claimed in any one of the preceding claims,
**characterized** in that on the stud (141, 201) a retaining ring (145, 146) is disposed which clamps the stud (141, 201) in the pin (4).

20. A friction lining warning device as claimed in any one of the preceding claims,
**characterized** in that the stud (121) is furnished with a shim (123) which is clampable in the pin (4) and is retained by a rivet (122).

## Revendications

1. Dispositif indicateur d'usure de garniture de friction, pour frein à disque (1) à garnitures partielles et à guidage par broche dont le boîtier d'étrier (3) ou le support de frein (5) est disposé d'une manière coulissante sur une broche (4), comprenant un goujon (19, 61, 91, 101, 121, 141, 190, 201), qui s'engage dans une ouverture de la broche (4) et est disposé de façon à être dans l'alignement de cette dernière, un boîtier de déclenchement (17, 69', 92, 104, 148, 212), qui entoure le goujon (19, 61, 91, 101, 121, 141, 190, 201) et qui solidaire du boîtier d'étrier (3) ou du support de frein (5), la broche (4) et le goujon (19, 61, 91, 101, 121, 141, 190, 201) étant agencés de façon à pouvoir être déplacés vis-à-vis du boîtier de déclenchement (17, 69', 92, 104, 148, 212) et du boîtier d'étrier (3) ou du support de frein (5), et des interrupteurs électriques (34, 35, 36) qui sont disposés dans le goujon (19, 61, 91, 101, 121, 141, 190, 201) ou dans le boîtier de déclenchement (17, 69', 92, 104, 148, 212) et qui sont déclenchés lorsque le goujon (19, 61, 91, 101, 121, 141, 190, 201) a parcouru une course (38, 39, 40) fixée à l'avance vis-à-vis du boîtier de déclenchement (17, 69', 92, 104, 148, 212), tandis que le boîtier de déclenchement (17, 69', 92, 104, 148, 212) et le goujon (19, 61, 91, 101, 121, 141, 190, 201) sont agencés de façon à pouvoir venir en butée l'un sur l'autre et à occuper une position de base et qu'une fois qu'ils occupent cette position de base, le boîtier de déclenchement (17, 69', 92, 104, 148, 212) peut être rendu solidaire du boîtier d'étrier (3) ou du support de frein (5) en restant dans les limites d'un domaine de tolérance, caractérisé en ce que le goujon (19, 61, 91, 101, 121, 141, 190, 201) comporte une butée présentant une surface frontale (29, 105) qui est agencée de façon à pouvoir être appliquée axialement sur la broche (4).

2. Dispositif indicateur d'usure de garniture de friction selon la revendication 1, caractérisé en ce que le goujon (19, 61, 91, 121, 141, 190, 201) comporte une partie annulaire en saillie (27) qui en fait le tour et présente une surface (29) orientée radialement qui constitue la butée.

3. Dispositif indicateur d'usure de garniture de friction selon l'une des revendications 1 et 2, caractérisé en ce que le goujon (19, 91, 121, 141, 190) présente une autre surface frontale (20) contre laquelle le boîtier de déclenchement (17, 92, 148) peut être placé en butée par une surface de fond (21).

4. Dispositif indicateur d'usure de garniture de friction selon l'une des revendications précédentes, caractérisé en ce qu'un soufflet (160) est disposé entre le goujon (141, 201) et le boîtier de déclenchement (148, 212).

5. Dispositif indicateur d'usure de garniture de friction selon l'une des revendications précédentes, caractérisé en ce que le boîtier de déclenchement (17, 69', 92, 104, 148, 212) est disposé sur un manchon d'amortissement (18, 44, 68', 171, 219) qui entoure la broche (4) à la façon d'une enveloppe cylindrique et qui est disposé dans une ouverture du boîtier d'étrier (3) ou du support de frein (5), entre la broche (4) et ce boîtier d'étrier (3) ou support de frein (5).

6. Dispositif indicateur d'usure de garniture de friction selon l'une des revendications précédentes, caractérisé en ce que le boîtier de déclenchement (17) comporte un filetage (42) qui est agencé de façon à pouvoir être vissé sur un filetage complémentaire correspondant (43) du manchon d'amortissement (18, 44).

7. Dispositif indicateur d'usure de garniture de friction selon l'une des revendications précédentes, caractérisé en ce que le manchon d'amortissement (18, 44) est en deux parties et comprend une pièce rapportée (44) filetée comportant un filetage (43).

8. Dispositif indicateur d'usure de garniture de friction selon l'une des revendications précédentes, caractérisé en ce qu'un fourreau de protection (46) comporte des parties en saillie (47) orientées axialement qui sont engagées dans des rainures (48) de la pièce rapportée (44) filetée et du boîtier de déclenchement (17) qui sont orientées axialement.

9. Dispositif indicateur d'usure de garniture de friction selon l'une des revendications précédentes, caractérisé en ce que le boîtier de déclenchement (69', 92, 104, 148) comporte des parties en saillie (71, 163) réalisées en forme de cran d'arrêt et s'étendant d'une manière annulaire sur tout le pourtour.

10. Dispositif indicateur d'usure de garniture de friction selon l'une des revendications précédentes, caractérisé en ce que le manchon d'amortissement (68') comporte des gorges (73) qui ont une forme annulaire qui en fait tout le tour et dans lesquelles les parties en saillie (71) du boîtier de déclenchement (68') peuvent s'enclencher.

11. Dispositif indicateur d'usure de garniture de friction selon l'une des revendications précédentes, caractérisé en ce que le boîtier de déclenchement (148, 212) est réalisé en deux parties et comprend un boîtier de capteur (166, 215) comportant des parties en saillie (176, 177, 178, 220, 221, 222).

12. Dispositif indicateur d'usure de garniture de friction selon l'une des revendications précédentes, caractérisé en ce que le goujon (61, 62, 201, 207) comporte une douille (62, 207).

13. Dispositif indicateur d'usure de garniture de friction selon la revendication 12, caractérisé en ce que la douille (62, 207) est coincée par effet de friction sur le goujon (61, 201).

14. Dispositif indicateur d'usure de garniture de friction selon la revendication 12, caractérisé en ce que la douille (62, 207) comporte des parties en salle (67, 205) et des gorges (66, 206) qui s'enclenchent dans des gorges (64, 204) et des parties en saillie (63, 203) du goujon (61, 201) qui sont réalisées d'une manière correspondante.

15. Dispositif indicateur d'usure de garniture de friction selon l'une des revendications 12 à 14, caractérisé en ce que le goujon (61, 201) et la douille (62, 207) comportent une rainure axiale (68, 208) et une partie en saillie (6, 209) axiale qui sont engagées l'une dans l'autre.

16. Dispositif indicateur d'usure de garniture de friction selon l'une des revendications précédentes, caractérisé en ce qu'à une extrémité ouverte (95, 154), le boîtier de déclenchement (92, 148, 212) comporte un talon (96, 156, 235) qui est orienté radialement vers l'intérieur et qui s'accroche derrière un talon (93, 150, 210) du goujon (91, 141, 201, 207) qui est orienté radialement vers l'extérieur.

17. Dispositif indicateur d'usure de garniture de friction selon la revendication 12, caractérisé en ce que la douille (102) sert à loger un ressort (103) qui prend appui sur le boîtier de déclenchement (104) et maintient le goujon (101, 102) en butée contre la broche (4).

18. Dispositif indicateur d'usure de garniture de friction selon l'une des revendications précédentes, caractérisé en ce que le goujon (19, 61, 91, 190) comporte un élément en tôle à ressort (26, 192) qui coince ce goujon (19, 61, 91, 190) dans la broche (4).

19. Dispositif indicateur d'usure de garniture de friction selon l'une des revendications précédentes, caractérisé en ce qu'un circlips (145, 146) est disposé sur le goujon (141, 201) et coince ce goujon (141, 201) dans la broche (4).

20. Dispositif indicateur d'usure de garniture de friction selon l'une des revendications précédentes, caractérisé en ce que le goujon (121) comporte une pièce de coincement (123) qui est agencée de façon à pouvoir être coincée dans la broche (4) et est maintenue par un rivet (122).
